# EUROPÄISCHE PATENTANMELDUNG

(11) **EP 1 669 281 A1**
(43) Veröffentlichungstag der Anmeldung: **14.06.2006**
(21) Anmeldenummer: 05023629.8
(22) Anmeldetag: 28.10.2005
(51) Int. Cl.: B62D 25/16, B62D 27/02

(54) **Kraftfahrzeug mit einem Kotflügel**

(30) Priorität: 10.12.2004 DE 102004059476
(71) Anmelder: Bayerische Motorenwerke Aktiengesellschaft, 80809 München (DE)
(72) Erfinder: Haas, Thorsten, 85716 Lohhof (DE); Bretz, Gerhard, 85640 Putzbrunn (DE)

(57) **Zusammenfassung**

Ein Kotflügel (1) eines Kraftfahrzeugs ist - in Fahrtrichtung (F) gesehen - im hinteren Bereich über einen Halter (3) seitlich an einer tragenden Karosserie (4, 5) des Kraftfahrzeugs angebunden. Der Halter (3) ist derart gestaltet, dass er, wenn der Kotflügel (1) bei einem Crash nach hinten gedrückt wird, sich derart plastisch verformt, dass der Abstand zwischen Kotflügel (1) und der tragenden Karosserie (4, 5) in Fahrzeugquerrichtung (Q) zumindest im Bereich des Halters (3) größer wird. Dadurch schiebt sich der Kotflügel (1) mit seiner Hinterkante von der Fahrzeugaußenseite her gesehen vor eine in Fahrtrichtung (F) gesehen hinten an den Kotflügel (1) angrenzende Seitentür (2).

## Beschreibung

Die Erfindung betrifft ein Kraftfahrzeug mit einem Kotflügel nach dem Oberbegriff des Patentanspruchs 1.

Aus der EP 1 319 581 A2 ist ein Kraftfahrzeug mit einem Kotflügel aus Kunststoff bekannt, der über einen Halter seitlich an einer tragenden Karosserie des Kraftfahrzeugs angebunden ist.

Aufgabe der Erfindung ist es, ein Kraftfahrzeug mit einem Kotflügel zu schaffen, der so an die tragende Karosserie des Kraftfahrzeugs angebunden ist, dass auch nach einem Crash eine in Fahrtrichtung gesehen hinten an den Kotflügel angrenzende Seitentür sich noch öffnen lässt.

Diese Aufgabe wird mit einem Kraftfahrzeug mit einem Kotflügel mit den Merkmalen des Patentanspruchs 1 gelöst.

Erfindungsgemäß ist ein Kotflügel eines Kraftfahrzeugs - in Fahrtrichtung gesehen - im hinteren Bereich über einen Halter seitlich an einer tragenden Karosserie des Kraftfahrzeugs angebunden. Der Halter ist derart gestaltet, dass er, wenn der Kotflügel bei einem Crash nach hinten gedrückt wird, sich derart plastisch verformt, dass der Abstand zwischen Kotflügel und der tragenden Karosserie zumindest im Bereich des Halters in Fahrzeugquerrichtung größer wird. Dadurch schiebt sich der Kotflügel mit seiner Hinterkante von der Fahrzeugaußenseite her gesehen über eine in Fahrtrichtung gesehen hinten an den Kotflügel angrenzende Seitentür.

Die allermeisten Seitentüren sind im vorderen Bereich über zumindest ein Scharnier an die tragende Karosserie des Kraftfahrzeugs angelenkt. Dabei ragt der vorderste Bereich der Türaußenhaut üblicherweise in Fahrtrichtung gesehen ein bisschen über die Scharnierachse nach vorne hinaus. Zum Öffnen der Seitentür wird diese um die zumindest eine Scharnierachse nach außen aufgeschwenkt. Dabei verschwenkt der vorderste Bereich der Türaußenhaut, der über die Scharnierachse nach vorne hinausragt, nach innen von der Fahrzeugaußenseite weg. Damit sich die Seitentür auch nach einem Crash öffnen lässt, ist es daher wichtig, dass sich der Kotflügel von der Fahrzeugaußenseite gesehen vor den vordersten Bereich der Türaußenhaut schiebt. Dies wird mit dem erfindungsgemäßen Halter sichergestellt. Würde sich der Kotflügel bei einem Crash von der Fahrzeugaußenseite gesehen hinter den vordersten Bereich der Türaußenhaut schieben, könnte die Seitentür nicht mehr oder nur mit hohem Kraftaufwand geöffnet werden, da der vorderste Bereich der Türaußenhaut durch den nach hinten verlagerten Bereich des Kotflügels sich nicht einfach nach innen von der Fahrzeugaußenseite weg verschwenken lassen würde.

Vorteilhafterweise weist der Halter zwischen der Anbindung an die tragende Karosserie und der Anbindung an den Kotflügel einen in der Fahrzeugebene schräg nach vorne und zur Fahrzeugaußenseite gerichteten Abschnitt auf. Die Fahrzeugebene wird in Fahrzeuglängs- und in Fahrzeugquerrichtung aufgespannt. Beim Crash biegt sich dann günstigerweise der schräg nach vorne gerichtete Abschnitt relativ zum an die tragende Karosserie angebundenen Abschnitt des Halters nach hinten. Dadurch wird der Kotflügel aufgrund der Geometrie des Halters zumindest im Bereich des Halters von der tragenden Karosserie weg nach außen gedrückt, sodass sich der Kotflügel von der Fahrzeugaußenseite her gesehen vor die Seitentür schiebt.

Weitere vorteilhafte Ausgestaltungen sind Gegenstand von Unteransprüchen.

In der Zeichnung ist ein Ausführungsbeispiel der Erfindung dargestellt, anhand dessen die Erfindung im folgenden näher beschrieben wird. Die einzelnen Figuren zeigen in schematischer Darstellungsweise:

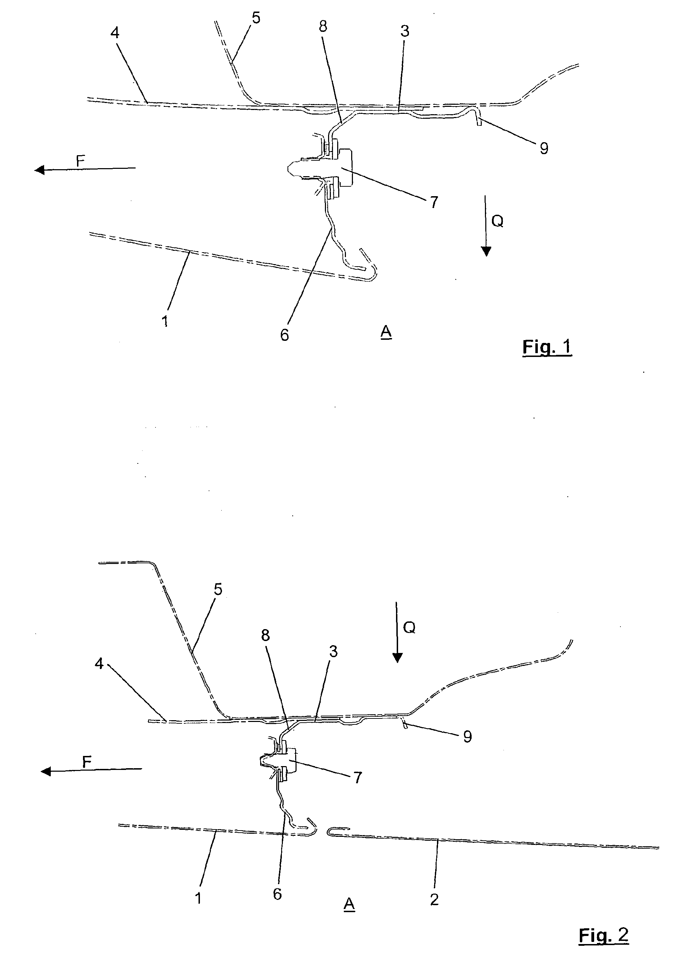

- Fig. 1: einen Höhenschnitt durch einen Kotflügel, der über einen Halter an einer tragenden Karosserie eines Personenkraftwagens angebunden ist, und
- Fig. 2: die Ansicht von Fig. 1 mit einer an den Kotflügel angrenzenden Seitentür.

In den beiden Figuren ist ein linker Kotflügel 1 eines Personenkraftwagens dargestellt, an den in Fahrtrichtung F gesehen hinten eine Seitentür 2 angrenzt. Der Kotflügel 1 ist im hinteren Bereich über einen Halter 3 an einer tragenden Karosserie des Personenkraftwagens im Bereich einer A-Säule angebunden. Die tragende Karosserie wird in diesem Bereich durch einen Stützträger 4 und einen Seitenrahmen 5 gebildet, an die der Halter 3 aus Stahlblech angeschweißt ist. Der Stützträger 4 erstreckt sich von der A-Säule nach vorne zumindest bis zu einer Federbeinaufnahme und dient zur weiteren Befestigung des Kotflügels 1. Der Seitenrahmen 5 bildet im wesentlichen die Seitenwand der Fahrgastzelle: Er erstreckt sich über die A-, B- und C-Säule und bildet einen Teil eines Seitenschwellers und eines Dachseitenrahmens.

Der Kotflügel 1 besteht aus Stahlblech, an dessen hinterem Rand ein Befestigungsflansch 6 angebracht ist. Der Kotflügel 1 ist über diesen Befestigungsflansch 6 mit einer Schraube 7 mit dem Halter 3 verschraubt. Zwischen dem Anschweißpunkt des Halters 3 an der tragenden Karosserie und dem Anschraubpunkt des Befestigungsflanschs 6 des Kotflügels 1 weist der Halter 3 einen im Höhenschnitt gesehen schräg nach vorne und zur Fahrzeugaußenseite A hin verlaufenden Abschnitt 8 auf.

Bei einem Crash wirken häufig hohe Kräfte von vorne auf den Kotflügel 1. Die Kräfte sind meist so hoch, dass trotz der Anbindung des Kotflügels 1 an den Stützträger 4 und der Anbindung über den Halter 3 dieser nach hinten verlagert wird. Dabei deformieren sich der Stützträger 4 und der Halter 3. Der schräg nach vorne verlaufende Abschnitt 8 des Halters 3 wird dabei gegenüber seinem mit der tragenden Karosserie verschweißten Abschnitt nach hinten gebogen. Dabei vergrößert sich aufgrund der Geometrie des Abschnitts 8 des Halters 3 der Abstand in Fahrzeugquerrichtung Q zwischen dem Kotflügel 1 und dem Stützträger 4 bzw. dem Seitenrahmen 5 im Bereich des Halters 3. Der Kotflügels 1 wird so bei einer Verlagerung nach hinten bei einem Crash zumindest im Bereich des Halters 3 nach außen geführt, sodass sich der Kotflügel 1 von der Fahrzeugaußenseite A gesehen vor die Seitentür 2 schiebt.

Die Seitentür 2 ist konventionell in Fahrtrichtung F gesehen an ihrem vorderen Ende über zwei Scharniere an der tragenden Karosserie des Personenkraftwagens angelenkt. Die Schwenkachse der Seitentür 2 befindet sich dabei ca. 10 cm hinter dem vordersten dargestellten Abschnitt der Seitentür 2. Zum Öffnen der Seitentür 2 wird diese mit ihrem hinteren Ende um die Schwenkachse zur Fahrzeugaußenseite A aufgeschenkt. Der vorderste Abschnitt der Seitentür 2, der sich vor der Schwenkachse befindet, verschwenkt dabei weg von der Fahrzeugaußenseite A nach innen zur A-Säule der tragenden Karosserie hin.

Da bei einem Crash der Kotflügel 1 von der Fahrzeugaußenseite gesehen nur vor die Außenseite des vordersten Bereichs der Seitentür 2 geschoben wird, kann die Seitentür 2 ohne hohen Kraftaufwand geöffnet werden. Würde dagegen der Kotflügel 1 nicht durch den Halter 3 beim Crash nach außen verlagert werden, könnte sich der Kotflügel 1 entweder mit der Seitentür 2 verkeilen, oder der Kotflügel 1 könnte sich von der Fahrzeugaußenseite A gesehen hinter die Seitentür 2 schieben. Dort würde er den vordersten Abschnitt der Seitentür 2 beim Öffnen der Seitentür 2 behindern, sodass sehr hohe Kräfte zum Öffnen der Seitentür 2 erforderlich wären. Durch den erfindungsgemäßen Halter 3 mit seinem schräg nach vorne und zur Fahrzeugaußenseite A gerichteten Abschnitt 8 ist sichergestellt, dass sich der Kotflügel 1 bei einem Crash immer von der Fahrzeugaußenseite A her gesehen vor die Seitentür 2 schiebt.

Der Halter 3 verstärkt zudem den Seitenrahmen 5 im Bereich seiner Anbindung. Der Halter 3 weist an dem Abschnitt, mit dem er am Seitenrahmen 5 anliegt, am Rand umlaufend einen vom Seitenrahmen 5 weg weisenden, abstehenden Kragen 9 auf, sodass dieser Abschnitt besonders biegesteif ist. Auf diese Weise verhindert der Halter 3, dass der Seitenrahmen 5 in diesem Bereich bei einem Crash von der Fahrzeugaußenseite A weg zur Fahrzeugmitte hin einknicken kann. Der Seitenrahmen 5 kann in diesem Bereich nur mehr zur Fahrzeugaußenseite A hin ausknicken. So stellt der Halter 3 noch auf andere Weise sicher, dass bei einem Crash der hintere Bereich des Kotflügels 1 stets zur Fahrzeugaußenseite A gedrückt wird.

## Patentansprüche

1. Kraftfahrzeug mit einem Kotflügel (1), der - in Fahrtrichtung (F) gesehen - im hinteren Bereich über einen Halter (3) seitlich an einer tragenden Karosserie (4, 5) des Kraftfahrzeugs angebunden ist, **dadurch gekennzeichnet, dass**, wenn der Kotflügel (1) bei einem Crash nach hinten gedrückt wird, sich der Halter (3) derart plastisch verformt, dass der Abstand zwischen Kotflügel (1) und der tragenden Karosserie (4, 5) in Fahrzeugquerrichtung (Q) im Bereich des Halters (3) größer wird, sodass sich der Kotflügel (1) mit seiner Hinterkante von der Fahrzeugau-ßenseite (A) her gesehen vor eine in Fahrtrichtung (F) gesehen hinten an den Kotflügel (1) angrenzende Seitentür (2) schiebt.

2. Kraftfahrzeug nach Anspruch 1, **dadurch gekennzeichnet, dass** der Halter (3) zwischen der Anbindung an die tragende Karosserie (4, 5) und der Anbindung an den Kotflügel (1) einen in der Fahrzeugebene (aufgespannt durch Fahrzeuglängs- und Fahrzeugquerrichtung(Q)) schräg nach vorne und zur Fahrzeugaußenseite (A) gerichteten Abschnitt (8) aufweist.

3. Kraftfahrzeug nach Anspruch 2, **dadurch gekennzeichnet, dass** beim Crash sich der schräg nach vorne gerichtete Abschnitt (8) relativ zum an die tragenden Karosserie (4, 5) angebundenen Abschnitt des Halters (3) nach hinten biegt.

4. Kraftfahrzeug nach einem der vorhergehenden Ansprüche, **dadurch gekennzeichnet, dass** der Halter (3) im Bereich einer A-Säule der tragenden Karosserie (4, 5) des Kraftfahrzeugs an einem Seitenrahmen (5) angebunden ist.

5. Kraftfahrzeug nach Anspruch 4, **dadurch gekennzeichnet, dass** der Halter (3) so gestaltet ist, dass er den Seitenrahmen (5) derart verstärkt, dass der Seitenrahmen (5) in dem Bereich des Halters (3) bei einem Crash nur zur Fahrzeugaußenseite (A) hin ausknicken kann.

6. Kraftfahrzeug nach einem der vorhergehenden Ansprüche, **dadurch gekennzeichnet, dass** der Halter im Bereich einer A-Säule der tragenden Karosserie (4, 5) des Kraftfahrzeugs an einem Stützträger (4) angebunden ist.

7. Kraftfahrzeug nach einem der vorhergehenden Ansprüche, **dadurch gekennzeichnet, dass** der Kotflügel (1) zumindest im wesentlichen aus Kunststoff besteht.
